# EUROPÄISCHE PATENTSCHRIFT

(11) **EP 0 995 535 B1**
(45) Veröffentlichungstag und Bekanntmachung des Hinweises auf die Patenterteilung: **23.11.2005**
(21) Anmeldenummer: 99120790.3
(22) Anmeldetag: 20.10.1999
(51) Int. Cl.: B23K 26/00, B29C 65/16, B01D 29/01

(54) **Laserschweissverfahren für Automatikgetriebeölfilter**
Laser welding method of oil filters for automatic gearbox
Méthode de soudage au laser de filtres à huile pour boite de vitesse automatique

(30) Priorität: 22.10.1998 DE 19848673; 24.12.1998 DE 19860357
(43) Veröffentlichungstag der Anmeldung: 26.04.2000
(73) Patentinhaber: IBS Filtran Kunststoff-/Metallerzeugnisse GmbH, 51597 Morsbach (DE); ISE Intex GmbH, 51597 Morsbach (DE); FILTRAN DIVISION, Des Plaines, IL 60016 (US)
(72) Erfinder: Beer, Bernhard, 51545 Waldbröl (DE); Beer, Markus, 51597 Morsbach (DE)
(74) Vertreter: Blum, Erwin

(56) Entgegenhaltungen:
- WO-A-95/26869
- DE-A- 4 225 679
- US-A- 5 049 274

## Beschreibung

Der Gegenstand der Erfindung ist ein Verfahren zum Laserverschweißen von zwei Filterhalbschalen aus Kunststoff für Automatikgetriebeölfilter.

Nach dem Stand der Technik kann das Herstellungsverfahren für Automatikgetriebeölfilter grundsätzlich in zwei Gruppen eingeteilt werden. Bei dem einen Herstellungsverfahren werden die Automatikgetriebeölfilter aus zwei Filterhalbschalen verschiedenen Materials, die eine aus Kunststoff und die andere aus Metall, als Kompositkonstruktion ausgelegt. Das Filtermedium wird zwischen den beiden Filterhalbschalen eingeklemmt. Danach wird die Metallhalbschale in dem Randbereich um die Kunststoffhalbschale durch Verkrimpen relativ dicht umschlossen. Aufgrund der unterschiedlichen Materialien ist es sehr aufwendig bei thermischen Einflüssen die Funktion im Hinblick auf Dichtheit und Maßhaltigkeit über die gesamte Lebensdauer des Filters zu erreichen.

Beim zweiten Herstellungsverfahren werden Automatikgetriebeölfilter in Vollkunststoffauslegung hergestellt. Das Filtermedium wird zwischen den beiden Filterhalbschalen eingeklemmt und die beiden Filterhalbschalen durch Zusammenschweißen zusammengefügt. Dabei werden die beiden Filterhalbschalen in einem Reibschweißverfahren solange gegeneinander gerieben, bis im Kontaktbereich am Rand ein Aufschmelzen des Kunststoffmaterials erfolgt und durch Hinzufügen von einer Verpreßkraft, die Schalen miteinander verschweißt werden. Im Stand der Technik werden verschiedene Varianten des Schweißverfahrens eingesetzt, insbesondere Vibrationsreibschweißen, Orbital-Vibrationsreibschweißen, Zirkular-Vibrationsreibschweißen oder Verschweißen mittels Ultraschall (Siehe US-A-5 049 274 und DE-A-196 10414).

Nachteilig bei diesen Verfahren sind niedrige Produktionsraten und Probleme bei der Dichtigkeit und das umlaufende Festklemmen des Filtermediums über den ganzen Rand der beiden Filterhalbschalen. Weiterhin handelt es sich bei den oben bezeichneten Schweißverfahren um ein Abtragsschweißverfahren. Dies bedeutet, daß beim Schweißen ein starker Schweißaustrieb auftritt und dieser erzeugte Abtrag bei der Konstruktion der Getriebeölfilter berücksichtigt werden muß, da es ansonsten zu Undichtigkeiten kommt. Die vorliegende Erfindung stellt daher ein verbessertes abriebfreies Schweißverfahren für Vollkunststoffgetriebeölfilter zur Verfügung.

Somit liegt die technische Aufgabe der Erfindung darin, ein neues Verfahren zur Herstellung von Automatikgetriebeölfiltern aus Kunststoff zur Verfügung zu stellen, das die oben stehenden Nachteile vermeidet.

Die technische Aufgabe wird durch ein Verfahren gemäß Anspruch 1 gelöst.

Bei diesem Verfahren werden die Nachteile der Methoden des Standes der Technik vermieden. Durch die gezielte Auslegung des Automatikgetriebeölfilters für das Laserlichtverschweißen können sehr hohe Produktionsraten mit Erfüllung der erforderten Dichtigkeit und speziell auch Sauberkeit im Verbindungsbereich erzielt werden. Das Laserlicht definiert den Schmelzbereich in der Schweißnaht 4 zwischen den beiden Filterhalbschalen 1 und 2 sehr genau. Daher tritt extrem wenig Schweißaustrieb auf. Dies ist ein klarer Vorteil gegenüber dem mitunter extrem starken Schweißaustrieb beim Vibrationsschweißverfahren.

In einem bevorzugten Verfahren wird vor dem Aneinanderfügen der Filterhalbschalen 1 und 2 ein Filter 3 zwischen die Filterhalbschalen eingelegt, der besonders bevorzugt mittels einer Klemmrippe 5 zwischen den beiden Filterhalbschalen 1 und 2 festgehalten wird. Als Filtermedium 3 wird entweder ein Taschenfilter oder ein einlagiger Filter verwendet.

Das Verfahren wird so ausgeführt, daß der umlaufend zu verschweißende Rand, an dem sich die beiden Filterhalbschalen 1 und 2 berühren, umlaufend entlang der Teilekontur aneinander gedrückt wird. Besonders bevorzugt wird während des gesamten Schweißverfahrens ein definierter Anpreßdruck über das Unterwerkzeug 7 bzw. das Oberwerkzeug 6 auf die Filterhalbschalen 1 und 2 aufrecht erhalten.

Erfindungsgemäß ist der Bereich des Werkzeuges, durch den der Laserstrahl geführt wird, laserlichtdurchlässig.

In einem besonders bevorzugten Verfahren wird für das Laserschweißverfahren ein Laser eingesetzt, der ausgewählt ist aus der Gruppe Neodym-YAG-Impulslaser, Neodym-YAG-Continuous-Wave-Laser und Diodenlaser.

Vorzugsweise werden Filterhalbschalen eingesetzt, die aus dem gleichen Kunststoff gefertigt sind und sich nur durch ihren Gehalt an Pigmenten unterscheiden.

Der durch das erfindungsgemäße Laserschweißverfahren hergestellte Automatikgetriebeölfilter besteht aus zwei Gehäusehälften 1 und 2, die zusammengefügt einen Innenraum bilden. In diesem Innenraum wird ein Filtermedium 3 jeglicher Art eingeklemmt, um allen Anforderungen dieser Bauteile in der Praxis gerecht zu werden. Damit das erfindungsgemäße Laserschweißverfahren angewendet werden kann, muß der Laserstrahl 8 durch das Material der einen Filtergehäusehalbschale 1 zu dem Schweißbereich 4 geleitet werden. Diese Filterhalbschale 1 muß daher aus laserlichtdurchlässigem Kunststoff bestehen. Damit der Laser 8 seine Wirkung im Schweißbereich 4 entfalten kann, muß die Energie des Laserstrahls an dieser Stelle vom Kunststoff absorbiert werden. Dies wird dadurch erreicht, daß das Kunststoffmaterial der zweiten Filtergehäusehalbschale 2 eine laserlichtabsorbierende Pigmentierung enthält, damit es zu einer Absorption des Laserlichtes kommt. Die Flansche der beiden Filtergehäusehalbschalen sind so ausgelegt, daß sie sich auf Stoß berühren und entlang dieser Berührungsstelle ein Laserstrahl 8 geführt wird, der durch die Lichtabsorption der einen Filterhalbschale 2 ein Aufschmelzen und somit ein Miteinanderverschmelzen der beiden Filterhalbschalen 1 und 2 erzielt.

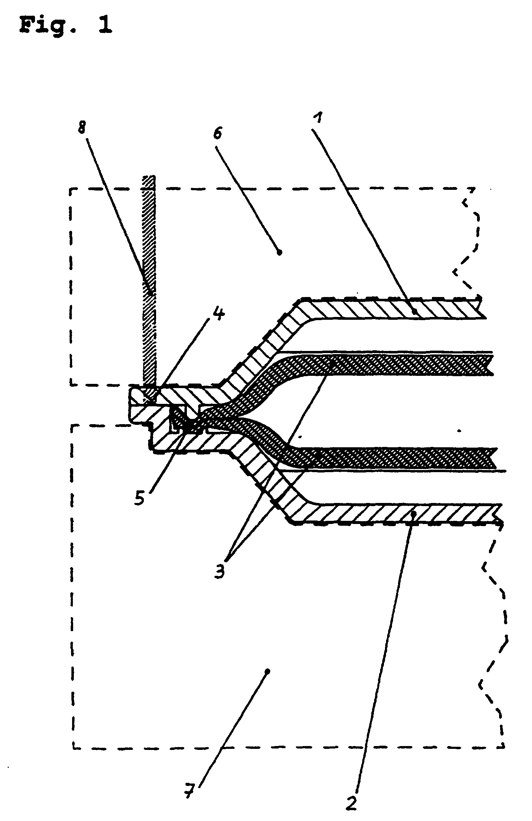

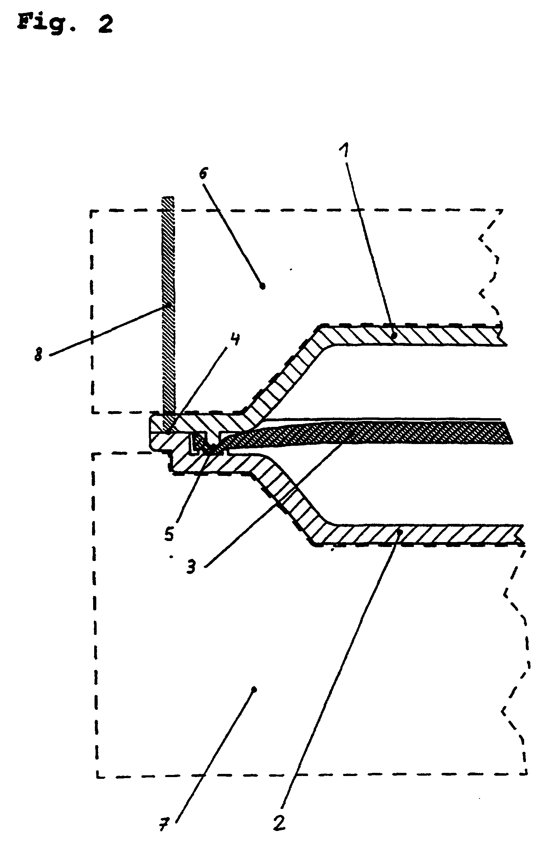

Das erfindungsgemäße Verfahren wird anhand der Figuren 1 und 2 beispielhaft erläutert.
- Figur 1: zeigt eine seitliche Ansicht im Querschnitt des Werkzeuges, während des Laserschweißverfahrens.
- Figur 2: zeigt eine seitliche Ansicht im Querschnitt des Werkzeuges, während des Laserschweißverfahrens.

Figur 1 zeigt eine seitliche Ansicht des Werkzeuges im Querschnitt während des Laserschweißverfahrens. Die beiden Filtergehäusehalbschalen 1 und 2 sind in das Werkzeug 6 und 7 eingelegt und zwischen diesen beiden Halbschalen ist das Filtermedium 3, hier ein Taschenfilter, eingeklemmt.

Figur 2 zeigt die gleiche Ansicht wie in Figur 1. Es ist hier jedoch als Filtermedium 3 ein einlagiger Filter zwischen den beiden Filterhalbschalen 1 und 2 eingeklemmt.

Die Filteroberschale 1 besteht aus laserlichtdurchlässigem Kunststoff und die Filterunterschale 2 aus laserlichtabsorbierendem Material. Zwischen diesen beiden Filterschalen 1 und 2 wird ein Filtermedium 3 durch die Klemmrippe 5 festgehalten. In Figur 1 ist dieses Filtermedium 3 ein Taschenfilter und in Figur 2 ein einlagiger Filter. Um eine Laserlichtverschweißung solcher Automatikgetriebeölfilter zu ermöglichen, ist es notwendig, daß der umlaufend zu verschweißende Rand umlaufend entlang der Teilekontur vollständig oder teilweise und gleichmäßig aneinander gedrückt wird. Der Schweißbereich 4 wird daher gezielt durch die Gestaltung des Niederhaltewerkzeuges 6 und der Aufnahme 7 zusammengepreßt. Während des gesamten Verschweißens durch das Laserlicht wird ein konstanter Anpreßdruck des Ober- und Unterwerkzeuges 6 und 7 beibehalten. Dieser ist abhängig von Filterkontur, Werkstoff und Teileverzug. Um bei dieser Auslegung ein Einbringen des Laserlichtstrahls 8 auf den Schweißbereich 4 zu ermöglichen, muß das Oberwerkzeug 6 in diesem Bereich aus laserlichtdurchlässigem Material bestehen.

Je nach Art und Auslegung des Filtermediums ist es notwendig, eine Abstimmung zwischen der Klemmrippe 5, dem Filtermedium 3 und dem Schweißbereich 4 durchzuführen. Das heißt, schon während der Vormontage, also dem Anpressen der Filterschalen 1 und 2 gegeneinander, wird der Endzustand der Filtermediumeinklemmung wie im verschweißten Zustand erreicht. Dies wird darin begründet, daß eine Laserlichtverschweißung kein Abtragsschweißen ist, wie zum Beispiel das Vibrationsverschweißen.

Die Laserlichtverschweißung funktioniert nur deshalb, weil eine exakt umlaufend aneinander liegende Berührung beider Filterhalbschalen 1 und 2 erzeugt wird. Durch die Laserabsorption der Filterunterschale 2 wird eine Erwärmung des Kunststoffmaterials bis auf Schmelztemperatur bewirkt, und diese Temperatur der Schmelze bewirkt ebenfalls ein Aufschmelzen der Filteroberschale 1 und ein homogenes Ineinanderschmelzen der Materialien. Dadurch wird eine definierte umlaufende homogene Schweißnaht beider Filterhalbschalen im Schweißbereich 4 erzielt. Da die Basismaterialien der Filteroberschale 1 und der Filterunterschale 2 identisch sind, jedoch sich nur durch die Einfärbung voneinander unterscheiden, werden optimale Voraussetzungen für eine haltbare und dauerhaft dichte Schmelzverbindung geschaffen.

### Bezugszeichenliste

- 1: Filteroberschale
- 2: Filterunterschale
- 3: Filtermedium
- 4: Schweißbereich
- 5: Klemmrippe
- 6: Niederhaltewerkzeug (Oberwerkzeug)
- 7: Aufnahme (Unterwerkzeug)
- 8: Laserlichtstrahl

## Patentansprüche

1. Verfahren zum Laserverschweißen von zwei Filterhalbschalen (1, 2) aus Kunststoff für Automatikgetriebeölfilter, **dadurch gekennzeichnet, dass** zwei Filterhalbschalen (1, 2) in einem Werkzeug (6, 7) aufeinandergelegt werden, wobei die Werkzeugteile (6, 7) zusammen einen Hohlraum zur Aufnahme der beiden Filterhalbschalen bilden, der im Wesentlichen der drei-dimensionalen Kontur der aufeinandergelegten Filterhalbschalen entspricht, und die Filterhalbschalen (1, 2) über ihren gemeinsamen Rand durch Laserlicht verschweißt werden, wobei eine Filterhalbschale (1) aus laserlichtdurchlässigem Kunststoff und die andere Filterhalbschale (2) aus laserlichtundurchlässigem Kunststoff besteht, und wobei der Laserstrahl (8) durch die laserlichtdurchlässige Filterhalbschale (1) entlang der Berührungsstelle mit der anderen Filterhalbschale geführt wird, dabei auf die laserlichtundurchlässige Filterhalbschale (2) trifft und durch die Lichtabsorption des laserlichtundurchlässigen Kunststoffmaterials ein Miteinanderverschmelzen der beiden Filterhalbschalen im Schweißbereich (4) erzielt wird wobei der Bereich des Werkzeugs, durch den der Laserstrahl geführt wird, laserlichtdurchlässig ist, und wobei während des Verschweißens ein definierter Anpreßdruck über die Aufnahme (7) und/oder das Niederhaltewerkzeug (6) auf die Filterhalbschalen (1, 2) aufrechterhalten wird.

2. Verfahren nach Anspruch 1, **dadurch gekennzeichnet, dass** vor dem Aneinanderfügen der Filterhalbschalen (1, 2) ein Filtermedium (3) in diese eingelegt wird.

3. Verfahren nach Anspruch 2, **dadurch gekennzeichnet, dass** das Filtermedium mittels einer Klemmrippe (5) festgehalten wird.

4. Verfahren nach den Ansprüchen 2 oder 3, **dadurch gekennzeichnet, dass** das Filtermedium (3) ein Taschenfilter oder ein einlagiger Filter ist.

5. Verfahren nach den Ansprüchen 1 bis 4, **dadurch gekennzeichnet, dass** der zu verschweißende Rand umlaufend vollständig oder teilweise aneinandergedrückt wird.

6. Verfahren nach den Ansprüchen 1 bis 5', **dadurch gekennzeichnet, dass** für das Laserschweißverfahren ein Laser eingesetzt wird ausgewählt aus der Gruppe Neodym-YAG-Impulslaser, Neodym-YAG-Continuous-Wave-Laser und Diodenlaser.

## Claims

1. A process for the laser welding of two filter half-shells (1, 2) made of plastic and used in automatic transmission oil filters, **characterized in that** two filter half-shells (1, 2) in a tool (6, 7) are placed one on top of the other, the tool components (6, 7) together forming a cavity to receive the two filter half-shells, which cavity essentially corresponds to the three-dimensional contour of the filter half-shells placed one on top of the other, and the filter half-shells (1, 2) are welded along their common edge using laser light, one filter half-shell (1) consisting of laser light-permeable plastic and the other filter half-shell (2) of laser light-impermeable plastic, and the laser beam (8) is passed through the laser light-permeable filter half-shell (1) along the position of contact with the other filter half-shell, striking the laser light-impermeable filter half-shell (2), and co-fusing of the two filter half-shells within the welding zone (4) is achieved by light absorption of the laser light-impermeable plastic material, the area of the tool through which the laser beam is passed being impermeable to laser light, and a defined contact pressure on the filter half-shells (1, 2) during welding being maintained via receiving element (7) and/or hold-down tool (6).

2. The process according to claim 1, **characterized in that** prior to assembling the filter half-shells (1, 2), a filter medium (3) is inserted therein.

3. The process according to claim 2, **characterized in that** the filter medium is held in position by a clamping rib (5).

4. The process according to claim 2 or 3, **characterized in that** a bag filter or a single-layered filter is used as filter medium (3).

5. The process according to claims 1 to 4, **characterized in that** the edge to be welded is pressed together along the entire or partial perimeter.

6. The process according to claims 1 to 5, **characterized in that** a laser selected from the group of neodymium YAG pulsed laser, neodymium YAG continuous wave laser and diode laser is used in the laser welding process.

## Revendications

1. Procédé pour souder au laser deux demi-coquilles de filtre (1, 2) en matière plastique pour des filtres à huile destinés à des transmissions automatiques,
**caractérisé en ce que**
deux demi-coquilles de filtre (1, 2) sont superposées dans un outil (6, 7), les parties d'outil (6, 7) formant ensemble un espace creux, destiné à recevoir les deux demi-coquilles de filtre et qui correspond pratiquement au contour tridimensionnel des demi-coquilles de filtre superposées, et les demi-coquilles de filtre (1, 2) sont soudées sur leur bord commun par la lumière laser, l'une des demi-coquilles de filtre (1) étant en matière plastique transparente à la lumière laser et l'autre demi-coquille de filtre (2) étant en matière plastique opaque à la lumière laser, et
le rayon laser (8) est guidé le long du point de contact avec l'autre demi-coquille de filtre à travers la demi-coquille de filtre (1) transparente à la lumière laser, il atteint alors la demi-coquille de filtre (2) opaque à la lumière laser et l'absorption de la lumière par la matière plastique opaque à la lumière laser fait fondre ensemble les deux demi-coquilles de filtre dans la zone de soudage (4), la zone de l'outil à travers laquelle le rayon laser est guidé étant transparente à la lumière laser, et
pendant le soudage une pression d'application est maintenue sur les demi-coquilles de filtre (1, 2) par l'intermédiaire du logement (7) et/ou de l'outil de retenue (6).

2. Procédé selon la revendication 1,
**caractérisé en ce que**
un matériau filtrant (3) est posé dans les demi-coquilles de filtre (1, 2) avant qu'elles soient assemblées.

3. Procédé selon la revendication 2,
**caractérisé en ce que**
le matériau filtrant est maintenu à l'aide d'une nervure de blocage (5).

4. Procédé selon les revendications 2 ou 3,
**caractérisé en ce que**
le matériau filtrant (3) est un filtre à poche ou un filtre à une couche.

5. Procédé selon les revendications 1 à 4,
**caractérisé en ce que**
le bord à souder est entièrement ou partiellement assemblé par pression à la périphérie.

6. Procédé selon les revendications 1 à 5,
**caractérisé en ce que**
le laser utilisé pour le procédé de soudage au laser est choisi parmi le groupe des lasers à impulsion YAG au néodyme, des lasers à onde continue YAG au néodyme et des lasers à diode.
